# EUROPÄISCHE PATENTSCHRIFT

(11) **EP 3 325 336 B1**
(45) Veröffentlichungstag und Bekanntmachung des Hinweises auf die Patenterteilung: **23.10.2019**
(21) Anmeldenummer: 16728585.7
(22) Anmeldetag: 02.06.2016
(51) Int. Cl.: B62M 9/08, B62M 9/10

(54) **STELLVORRICHTUNG FÜR SCHALTGETRIEBE**
ACTUATING DEVICE FOR A MANUAL TRANSMISSION
DISPOSITIF D'ACTIONNEMENT D'UN MÉCANISME DE CHANGEMENT DE VITESSE

(30) Priorität: 21.07.2015 AT 4872015
(43) Veröffentlichungstag der Anmeldung: 30.05.2018
(73) Patentinhaber: Praxis Works LLC, Santa Cruz, CA 95060 (US)
(72) Erfinder: SCHUSTER, Gregor, 2500 Baden (AT)
(74) Vertreter: Knowles, James Atherton
(86) Internationale Anmeldenummer: PCT/AT2016/000060
(87) Internationale Veröffentlichungsnummer: WO 2017/011841

(56) Entgegenhaltungen:
- WO-A1-2012/009571
- WO-A1-2013/013256
- US-B1- 6 267 699

## Beschreibung

Die Erfindung betrifft eine Stellvorrichtung für Schaltgetriebe, insbesondere von Fahrrädern, umfassend zumindest zwei Radblätter, die wahlweise von einem umlaufenden Zugmittel umfassbar sind, wobei das Radblatt mit dem kleinsten Durchmesser ungeteilt ist und wenigstens ein weiteres Radblatt aus zumindest zwei unabhängig voneinander verstellbaren Sektoren besteht, die ausgebildet sind, um jeweils wahlweise in die durch das Radblatt mit dem kleinsten Durchmesser gebildete Fluchtebene verlagert bzw. aus der Fluchtebene weg verlagert zu werden, sowie ein von der Drehbewegung der Radblätter entkoppeltes, verstellbares Stellelement und mit den Radblättern mitdrehende Verschubelemente, wobei jedem Sektor ein Verschubelement zugeordnet ist, das mit dem jeweiligen Sektor zusammenwirkt, um den Sektor in Abhängigkeit von der Stellung des Verschubelements in die Fluchtebene bzw. aus der Fluchtebene zu verlagern, wobei das Stellelement mit den Verschubelementen zusammenwirkt, um die Verschubelemente während der Drehung wahlweise in eine erste und in eine zweite Stellung zu bewegen.

Die Erfindung betrifft weiters eine Gangschaltung, insbesondere für ein Fahrrad, umfassend eine erfindungsgemäße Stellvorrichtung sowie ein Fahrrad, umfassend eine erfindungsgemäße Gangschaltung. Stellvorrichtungen der eingangs genannten Art sind bspw. aus der gattungsgemäßen WO 2013/013256 A1 bekannt und dienen der wahlweisen Umschaltung eines Zugmittels, bspw. einer Fahrradkette, zwischen zumindest zwei Radblättern mit unterschiedlichem Durchmesser. Bei Fahrrädern wird hierdurch das Übersetzungsverhältnis gesteuert. Die einzelnen Radblätter sind im Wesentlichen rund ausgebildet und weisen Mittel auf, um mit dem Zugmittel zusammenzuwirken. Bei üblichen Fahrrädern sind die Radblätter als Zahnräder ausgebildet, wobei die einzelnen Zähne in die Zwischenräume eines als Kette ausgebildeten Zugmittels eingreifen können und dieses damit am jeweiligen Radblatt fixieren.

Das Umschalten, also das Verlagern des Zugmittels von einem Radblatt auf ein anderes Radblatt kann entweder durch eine Bewegung des Zugmittels oder eine Bewegung der Radblätter erfolgen. Die vorliegende Erfindung befasst sich mit Stellvorrichtungen, bei denen die Radblätter relativ zum Zugmittel bewegt werden.

Um einen besonders effektiven und schnellen Umschaltvorgang bereitstellen zu können, ist bereits vorgeschlagen worden, zumindest ein Radblatt in Sektoren aufzuteilen, die unabhängig voneinander bewegt werden können. Dadurch ist es möglich, die einzelnen Sektoren zeitversetzt in Eingriff mit dem Zugmittel zu bringen. Dadurch wird gewährleistet, dass zumindest ein Teil des Zugmittels immer im Eingriff mit einem der Radblätter ist. Weiters ist hierbei bekannt, dass das Radblatt mit dem kleinsten Durchmesser ungeteilt ist und das zumindest eine weitere Radblatt in die Ebene des kleinsten Radblattes verlagert werden kann. Es gibt also eine fixe Ebene, die Fluchtebene, in der das Zugmittel angeordnet ist. Die einzelnen Radblätter werden wahlweise in diese Ebene bewegt.

Um die einzelnen Sektoren des zumindest einen geteilten Radblattes in die Fluchtebene des kleinsten Radblattes zu bewegen, ist beispielsweise bekannt, dass jedem Sektor ein Verschubelement zugeordnet ist, welches derart beweglich angeordnet ist, dass es in einer ersten Stellung den Sektor in die Fluchtebene drückt und in einer zweiten Stellung den Sektor aus der Fluchtebene heraus drückt. Diese Verschubelemente werden mithilfe eines Stellelementes zwischen den beiden Stellungen verschoben. Das Stellelement ist gegenüber der Drehbewegung der Radblätter entkoppelt und so angeordnet, dass die einzelnen Verschubelemente in der Nähe des Stellelementes durch die Drehung der Radblätter vorbeirotieren. Falls das Zugmittel von einem Radblatt auf ein anderes Radblatt umgeschaltet werden soll, wird das Stellelement betätigt, also so verstellt, dass es mit dem vorbeidrehenden Verschubelementen der Reihe nach kontrolliert kollidiert und die Verschubelemente dadurch in eine Stellung gebracht werden, in der der jeweilige Sektor entsprechend verlagert wird.

Die Stellvorrichtungen gemäß dem Stand der Technik weisen einige Nachteile auf. Es ist eine sehr hohe Präzision im Zusammenspiel zwischen dem Stellelement und den Verschubelementen erforderlich. Falls das Stellelement und/oder ein Verschubelement die für die Umstellung vorgesehene Position nicht exakt einnimmt, kann es zu einer Fehlfunktion kommen, wobei entweder ein Schaltvorgang ausgeführt wird ohne dass dies beabsichtigt ist, oder ein beabsichtigter Schaltvorgang nicht ausgeführt wird. Ungenauigkeiten in der Positionierung des Stellelements sind in der Praxis unvermeidbar, da der für die Umstellung in der Regel vorgesehene Bowdenzug einer thermischen Längenveränderung unterliegt. Weiters ist die Stellvorrichtung während des Befahrens von unbefestigten Wegen Schlägen durch Steine, Äste und dgl. ausgesetzt, was ebenfalls zu einer unbeabsichtigten Veränderung der Grundeinstellung der Stellpositionen des Stellelements führen kann. Ein weiterer Nachteil bei vielen Stellvorrichtungen gemäß dem Stand der Technik liegt darin, dass während des Schaltvorganges ein schleifender Kontakt zwischen dem Stellelement und den Verschubelementen auftritt, der zu einer schnellen Abnutzung dieser Elemente führt.

Es ist daher eine Aufgabe der Erfindung, die oben genannten Nachteile zu vermindern oder zu beseitigen. Insbesondere soll eine robuste Stellvorrichtung bereitgestellt werden, die ohne schleifende Kontakte während der normalen Drehung der Radblätter funktioniert.

Zur Lösung dieser Aufgabe sieht die Erfindung bei einer Stellvorrichtung der eingangs genannten Art vor, dass das Stellelement zwischen einer ersten und einer zweiten Stellposition verstellbar ist, in denen das Stellelement mit dem jeweils vorbeilaufenden Verschubelement in Eingriff gelangt, um das Verschubelement in die erste bzw. zweite Stellung zu bewegen, wobei das Stellelement in der ersten und/oder der zweiten Stellposition auslenkbar gehalten ist, sodass es während wenigstens eines Teils der Umstellbewegung von dem Verschubelement mitgenommen und ausgelenkt wird.

Ein Schaltvorgang funktioniert also folgendermaßen. Zuerst wird das Stellelement vom Bediener angesteuert, bspw. mithilfe eines Seilzuges (Bowdenzug) oder mittels eines elektrischen Antriebs. Dadurch wird das Stellelement in den Drehweg der Verschubelemente bewegt. Bei der Drehung der Radblätter kollidiert ein Verschubelement mit dem Stellelement, wodurch eine Bewegung des Verschubelements in die erste bzw. zweite Stellung bewirkt wird, was wiederum eine Verlagerung des jeweiligen Sektors zur Folge hat. Für die Auslösung des Umstellvorgangs ist es somit lediglich erforderlich, dass das jeweilige Verschubelement während der Drehbewegung der Radblätter mit dem Stellelement in Wirkverbindung gelangt, wozu jedoch eine exakte Positionierung des Stellelements nicht unbedingt erforderlich ist. Die miteinander zusammenwirkenden Flächen des Stellelements und des Verschubelements können ohne weiteres so ausgestaltet sein, dass das Verschubelement über einen gewissen Toleranzbereich der Stellelementposition eingefangen wird. Dadurch, dass das Stellelement in der jeweiligen Stellposition auslenkbar gehalten ist, wird einerseits sichergestellt, dass das ggf. nicht exakt positionierte Stellelement während des Ineingriffgelangens mit dem Verschubelement automatisch eine korrekte Position einnimmt. Andererseits wird dadurch ermöglicht, dass das Stellelement sich während der Umstellbewegung des Verschubelements mit der Drehbewegung des Verschubelements mitbewegt. Dadurch wird während des Umstellvorgangs ein schleifender Kontakt zwischen dem Stellelement und dem Verschubelement weitgehend vermieden, wobei insbesondere ein rollender Kontakt angestrebt wird. Außerdem gewährleistet das sich mit dem Verschubelement während des Umstellvorganges mitbewegende Stellelement eine präzise Führung des Verschubelements auch dann, wenn die ursprüngliche Stellposition des Stellelements nicht exakt eingehalten wurde.

Bevorzugt ist vorgesehen, dass das Stellelement mit einem Rückstellelement, insbesondere einer Feder, zusammenwirkt, welches ausgebildet ist, um das Stellelement von der ausgelenkten Stellung in die erste bzw. zweite Stellposition zurückzuholen. Das Stellelement wird nach Vollendung der Umstellbewegung eines Verschubelements somit automatisch zurückgeholt, um unmittelbar danach das in Drehrichtung nächste Verschubelement entsprechend zu betätigen. Bevorzugt ist hierbei vorgesehen, dass ein der ersten bzw. zweiten Stellposition entsprechender Anschlag vorgesehen ist, der die Rückholbewegung des Verschubelements beendet.

Sobald alle Verschubelemente durch das Stellelement geschalten wurden und das Stellelement nach der Umstellung des letzten Verschubelements zurückgeholt wurde, bleibt das Stellelement in der jeweiligen Stellposition, in welcher es durch die Verschubelemente nicht mehr berührt wird. Alternativ kann eine dritte Stellposition vorgesehen sein, die eine Ruheposition ist, in welche das Stellelement nach einem vollständigen Schaltvorgang bewegt wird. Durch die automatische Rückholung des Stellelements ist ein Kollision mit den Verschubelementen ausgeschlossen. Sollte das Stellelement im weiteren Betrieb dennoch eine unvorhergesehene Stellung einnehmen und mit den Verschubelementen kollidieren, kann es auf Grund der auslenkbaren Anordnung ausweichen ohne dass Bauteile zerstört werden.

In einer bevorzugten Ausbildung ist vorgesehen, dass das Verschubelement in radialer Richtung zwischen der ersten und der zweiten Stellung bewegbar ist. Das Verschubelement wird also durch das Stellelement in Richtung zur Drehachse der Radblätter hinbewegt bzw. von der Drehachse der Radblätter wegbewegt. Dadurch kann insbesondere eine in Axialrichtung der Drehachse der Radblätter platzsparende Ausführung der Erfindung bereitgestellt werden.

Um das Zusammenwirken zwischen den einzelnen Verschubelementen und dem Stellelement einfach und wirkungsvoll zu gestalten, ist bevorzugt vorgesehen, dass die Verschubelemente und der jeweils zugeordnete Sektor über eine Kulissenführung miteinander zusammenwirken, um die radiale Bewegung der Verschubelemente in eine quer dazu verlaufende Verlagerung des Sektors umzusetzen. Bevorzugt ist ein rampenförmiger Abschnitt der Führung vorgesehen, d.h. ein zur Fluchtebene geneigter Abschnitt. Hierbei ist besonders bevorzugt vorgesehen, dass die Rampe in einen zur Fluchtebene parallelen Sperrabschnitt übergeht, in welchem keine weitere Verlagerung des Sektors durchgeführt wird, auch wenn das Verschubelement weiter bewegt wird. Dieser Sperrabschnitt kann bspw. ein Kanal sein, der im Wesentlichen senkrecht zur Richtung der Rampe angeordnet ist und ausgebildet ist, um einen Teil des Verschubelements aufzunehmen.

Besonders bevorzugt ist es, wenn die Verschubelemente mit mit den Sektoren verbundenen Führungselementen zusammenwirken. Die Führungselemente sind hierbei bevorzugt aus einem Kunststoff. Die Verschubelemente greifen bevorzugt mit einem Gleitelement, welches bspw. im Wesentlichen zylindrisch ausgebildet ist, in einen entsprechenden rampenartigen Kanal im Führungselement ein, wodurch eine Verlagerung des Führungselements und somit auch des damit verbundenen Sektors relativ zum Verschubelement erzielt wird. Die Führungselemente sind bevorzugt starr in Öffnungen der Sektoren angeordnet. Alternativ kann vorgesehen sein, dass die Führungselemente einstückig mit den Sektoren ausgebildet sind und bspw. mit einer Gleitschicht aus Kunststoff überzogen sind.

Bevorzugt ist vorgesehen, dass das Stellelement um eine in Richtung der Drehachse der Radblätter verlaufende Schwenkachse auslenkbar gehalten ist. Das Stellelement wird also um eine zur Drehachse der Radblätter parallele Schwenkachse schwenkbar gelagert und beim Umschaltvorgang durch die Bewegung der Verschubelemente in Drehrichtung verschwenkt. Diese Ausbildung mit einer festen Schwenkachse erlaubt eine einfache Bedienung des Stellelements. Bevorzugt ist vorgesehen, dass das Stellelement über einen Seilzug, gegebenenfalls unter Zwischenschaltung eines Zwischenelements, verstellt werden kann.

Weiters ist bevorzugt vorgesehen, dass das Radblatt mit dem kleinsten Durchmesser Öffnungen aufweist, durch welche jeweils wenigstens ein Verschubelement verläuft oder in welchen jeweils wenigstens ein Verschubelement angeordnet ist. Dies ermöglicht eine Ansteuerung der Umstellbewegung der Verschubelemente bzw. der Sektoren von der Seite des kleinsten Radblattes aus.

Eine bevorzugte Ausbildung sieht vor, dass die Stellvorrichtung an der Tretkurbel eines Fahrrades angeordnet ist und die Radblätter als mit der Tretkurbel rotierbar gehaltene Kettenblätter ausgebildet sind. Bei einer solchen Anwendung ist das kleinste Kettenblatt in der Regel innenseitig angeordnet. Die oben erwähnte Ansteuerung der Umstellbewegung von der Seite des kleinsten Kettenblattes ermöglicht somit eine Ansteuerung von innen her, was eine geschützte Anordnung der Stellmechanik ermöglicht.

Bevorzugt ist vorgesehen, dass das Stellelement dem Radblatt mit dem kleinsten Durchmesser benachbart angeordnet ist. Hierbei ist besonders bevorzugt vorgesehen, dass das Verstellelement auf der dem nächstgrößeren Radblatt abgewandten Seite des kleinsten Radblattes angeordnet ist. Dadurch wird die Stellvorrichtung kompakter, weil die Radblätter enger angeordnet werden können. Aufgrund der dadurch bedingten kürzeren Stellwege der Radblattsektoren wird der Schaltvorgang auch effizienter.

Eine bevorzugte Ausbildung sieht vor, dass die Verschubelemente jeweils zwei vorzugsweise axial zum Stellelement vorragende Mitnehmerelemente, insbesondere Erhebungen oder Zapfen, aufweisen, die vorzugsweise in radialer Richtung voneinander beabstandet und die mit wenigstens einem Eingriffsbereich des Stellelements in Eingriff bringbar sind, wobei ein erstes Mitnehmerelement in der ersten Stellposition des Stellelements mit dem wenigstens einen Eingriffsbereich in Eingriff bringbar und ein zweites Mitnehmerelement in der zweiten Stellposition des Stellelements mit dem wenigstens einen Eingriffsbereich in Eingriff bringbar ist. Ein Mitnehmerelement ist also dafür vorgesehen, um den Sektor in die Fluchtebene zu bewegen und das andere Mitnehmerelement ist dafür vorgesehen, um den Sektor aus der Fluchtebene heraus zu bewegen. Je nach Stellposition des Stellelements wird das eine oder das andere Mitnehmerelement durch das Stellelement betätigt. Dadurch sind die durch das Stellelement und das Verschubelement beim Schaltvorgang zurückzulegenden Wege wesentlich kleiner, als wenn bspw. lediglich ein Mitnehmerelement vorgesehen ist, sodass eine schnellere Schaltung von einem Radblatt auf ein anderes Radblatt möglich ist.

Weiters ist bevorzugt vorgesehen, dass das Stellelement zwei Eingriffsbereiche aufweist, wobei das erste Mitnehmerelement in der ersten Stellposition des Stellelements mit einem ersten Eingriffsbereich in Eingriff bringbar und das zweite Mitnehmerelement in der zweiten Stellposition des Stellelements mit dem zweiten Eingriffsbereich in Eingriff bringbar ist. Das Stellelement weist also zwei verschiedene Bereiche auf, die jeweils ausgebildet sind, um mit einem Mitnehmerelement in Eingriff gebracht zu werden. Dadurch kann die Effizienz der Stellvorrichtung bei Schaltvorgang weiter erhöht werden.

Hierbei ist besonders bevorzugt vorgesehen, dass der oder die Eingriffsbereich(e) des Stellelements von einer Ausnehmung, Mulde oder dgl. gebildet ist, in welche das jeweilige Mitnehmerelement formschlüssig eingreift. Ein derart ausgebildeter Eingriffsbereich ist besonders gut geeignet, um ein Mitnehmerelement zu bewegen. Insbesondere ist eine solche Ausbildung sehr fehlertolerant, also auch eine aufgrund von thermischen Verformungen oder anderen äußeren Einflüssen erfolgte unerwünschte Veränderung der Einstellung führt nicht zu einem Versagen der Schaltung, sondern wird in gewissen Grenzen durch das Zusammenspiel zwischen Eingriffsbereich und Mitnehmerelement ausgeglichen.

Die Verschubelemente bestehen bevorzugt aus einem Kunststoff. Das Stellelement besteht ebenfalls bevorzugt aus einem Kunststoff.

Gemäß einem weiteren Aspekt betrifft die Erfindung eine Gangschaltung, insbesondere für ein Fahrrad, umfassend eine erfindungsgemäße Stellvorrichtung.

Gemäß einem weiteren Aspekt betrifft die Erfindung ein Fahrrad, umfassend eine erfindungsgemäße Gangschaltung.

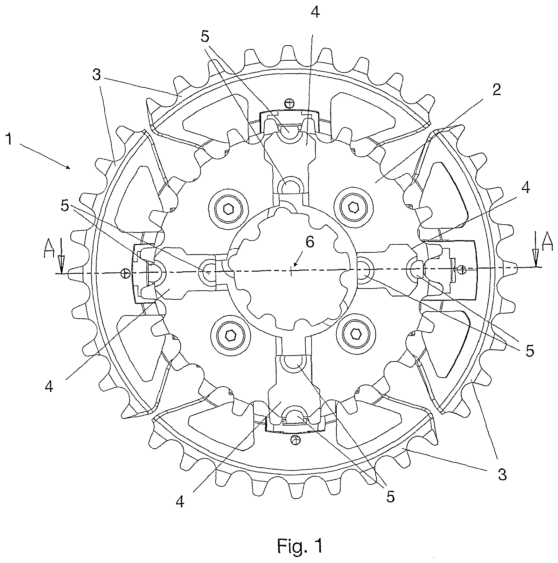

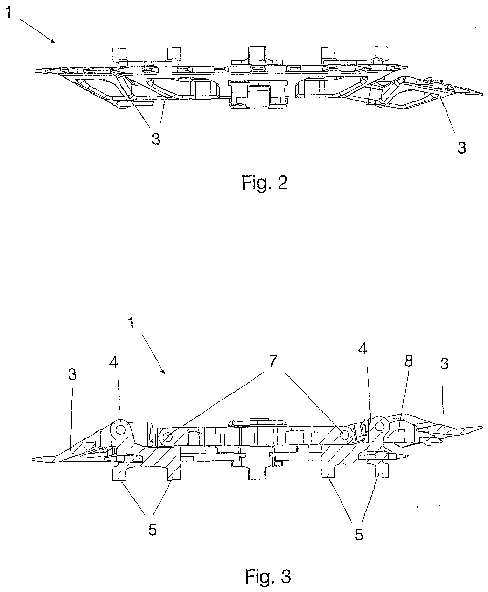

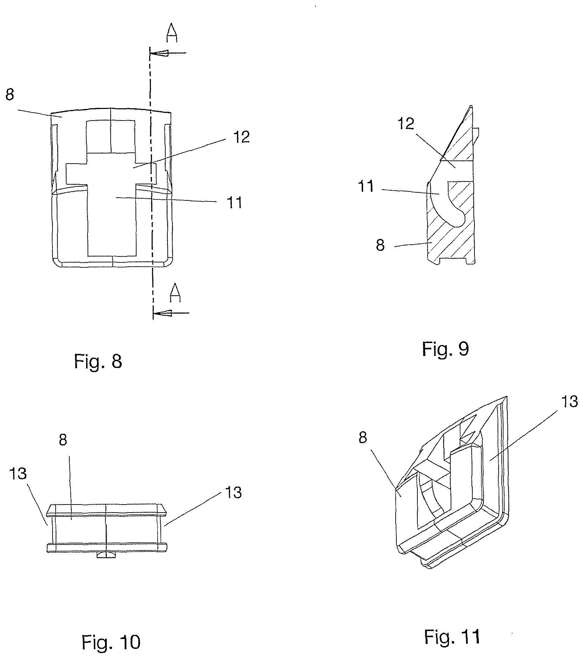

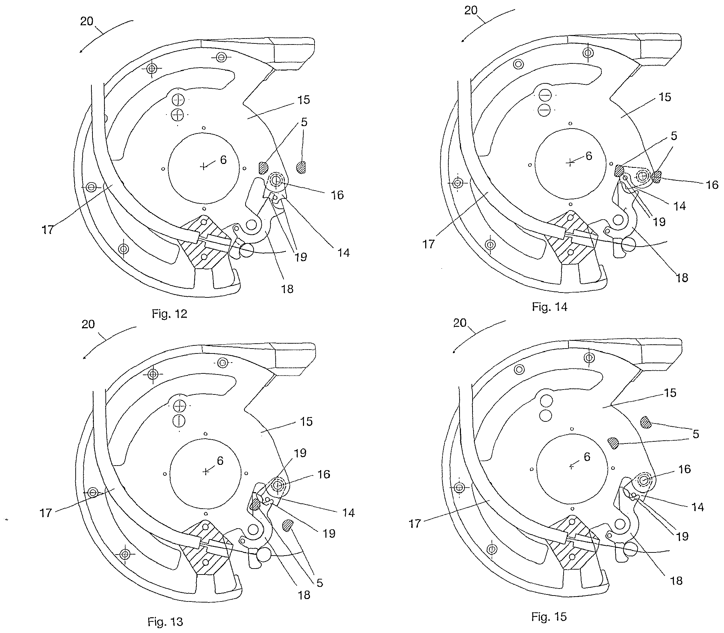

Die Erfindung wird nachfolgend anhand eines in der Zeichnung schematisch dargestellten Ausführungsbeispiels näher erläutert. In dieser zeigen Fig. 1 eine Seitenansicht einer erfindungsgemäßen Stellvorrichtung, Fig. 2 eine Draufsicht auf die Stellvorrichtung gemäß Fig. 1, Fig. 3 einen Schnitt durch die Stellvorrichtung gemäß Fig. 1, Fig. 4-7 Darstellungen eines erfindungsgemäßen Verschubelements, Fig. 8-11 Darstellungen eines erfindungsgemäßen Führungselements und Fig. 12-15 den Ablauf eines Schaltvorganges einer erfindungsgemäßen Stellvorrichtung.

In Fig. 1 ist eine mit 1 bezeichnete erfindungsgemäße Stellvorrichtung dargestellt, welche ein ungeteiltes Kettenblatt 2 mit kleinem Durchmesser, sowie ein aus vier viertelkreisartigen Sektoren 3 bestehendes größeres Kettenblatt umfasst. Beide Kettenblätter sind Zahnkränze, die ausgebildet sind, um mit einem nicht dargestellten Zugmittel, insbesondere einer Kette zusammenzuwirken. Das ungeteilte Kettenblatt 2 weist Öffnungen auf, in denen Verschubelemente 4 angeordnet sind. Die Verschubelemente 4 weisen jeweils zwei Mitnehmerelemente 5 auf, die ausgebildet sind, um mit einem nicht dargestellten Stellelement zusammenzuwirken. Die Verschubelemente 4 sind radial verschiebbar angeordnet. Das ungeteilte Kettenblatt 2 sowie das durch die Sektoren 3 gebildete Kettenblatt sind drehfest miteinander verbunden und um eine Drehachse 6 drehbar gelagert.

Mit einer solchen Stellvorrichtung kann das Übersetzungsverhältnis einer Kettenschaltung eines Fahrrades durch das axiale Zuführen von Sektoren in die Fluchtebene der Kette geändert werden. Die Stellvorrichtung ist hierbei an der Tretkurbel angeordnet. Für das Umstellen der Kette von dem kleinen Kettenblatt 2 auf das große, sektorierte Kettenblatt werden die einzelnen Sektoren 3 des großen Kettenblatts nacheinander in die Fluchtebene des kleinen Kettenblatts 2 gebracht. Vor Beginn des Umschaltvorgangs umschlingt die Kette noch das kleine Kettenblatt 2. Danach wird ein erster Sektor 3 des großen Kettenblatts, nämlich jener, der sich aktuell im nicht umschlungenen Winkelbereich befindet, in die Flucht der Kette eingerückt. Im Laufe der Drehbewegung des Radsatzes nimmt dieser erste Sektor 3 die Kette auf. In weiterer Folge können die übrigen Sektoren 3 des großen Kettenblatts, sobald sie jeweils in den nicht umschlungenen Winkelbereich gelangt sind, in gleicher Weise in die Flucht der Kette eingerückt werden; wenn dies für alle Sektoren 3 erfolgt ist, ist der Wechsel auf den Gang, der dem großen Kettenblatt entspricht, zu Ende geführt.

Diese auf den Einsatz von sektorierten, geteilten und/oder unterbrochenen Zahnkränzen beruhende Ausbildung ermöglicht ein Schalten während des Lastbetriebes, da die Kette sich auch während des Schaltvorganges im Eingriff mit den Kettenblättern beider Übersetzungsverhältnisse (und nur mit diesen) befindet. Der Platzbedarf solcher Schaltungen kann geringer ausgeführt werden.

In Fig. 2 ist die Stellvorrichtung gemäß Fig. 1 in Seitenansicht dargestellt. Hierbei ist einer der Sektoren 3 im aus der durch das ungeteilte Kettenblatt 2 gebildeten Fluchtebene herausgeschwenkten Zustand dargestellt, während die übrigen Sektoren 3 sich in der Fluchtebene befinden. Diese Stellung der Sektoren 3 tritt auf, während ein Gangwechsel stattfindet und entweder der herausgeschwenkte Sektor 3 als erster herausgeschwenkt wurde und die anderen Sektoren 3 anschließend herausgeschwenkt werden oder der herausgeschwenkte Sektor 3 als letzter Sektor noch nicht in Fluchtebene geschwenkt wurde. Im ersten Fall wird das Zugmittel auf das ungeteilte Kettenblatt 2 übertragen und im zweiten Fall auf das durch die Sektoren 3 gebildete Kettenblatt.

In Fig. 3 ist ein Schnitt gemäß der Linie A-A in Fig. 1 dargestellt, wobei einer der Sektoren 3 aus der Fluchtebene herausgeschwenkt dargestellt ist. Es ist ersichtlich, dass die Sektoren 3 jeweils um eine Schwenkachse 7, die senkrecht zur Drehachse 6 angeordnet ist, in die Fluchtebene bzw. aus der Fluchtebene heraus verschwenkt werden können. Die Verschubelemente 4 sind radial verschieblich, wobei das dem herausgeschwenkten Sektor 3 zugeordnete Verschubelement 4 in einer diesem Zustand entsprechenden ersten Stellung ist und das dem in der Fluchtebene befindlichen Sektor 3 zugeordnete Verschubelement 4 in einer zweiten Stellung ist. Die Verschubelemente 4 wirken mit einem rampenartigen Führungselement 8 des Sektors 3 zusammen, um die Verschwenkung zu bewirken.

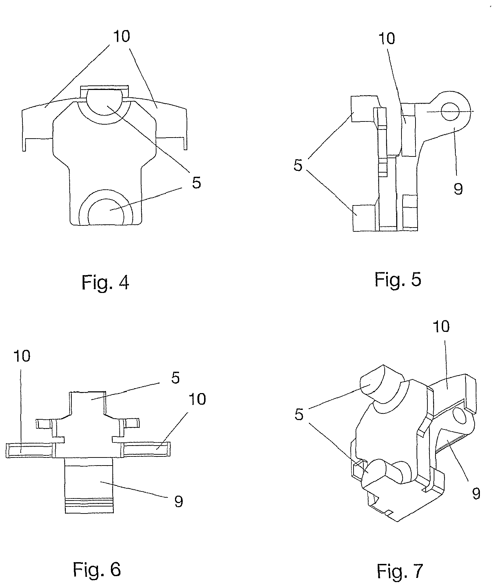

In den Fig. 4 bis 7 ist ein Verschubelement 4 in verschiedenen Ansichten dargestellt. Es ist ersichtlich, dass die Mitnehmerelemente 5 eine im Wesentlichen zylindrische Form aufweisen, die ausgebildet ist, um mit einem Stellelement zusammenzuwirken und dadurch verschoben zu werden. Weiters umfasst das Verschubelement 4 ein Gleitelement 9, welches mit dem rampenartigen Führungselement 8 zusammenwirkt. Das Gleitelement 9 weist eine im Wesentlichen zylindrische Form auf. Zur Führung des Verschubelements 4 in einer Öffnung des ungeteilten Radblattes 2 sind Flügel 10 vorgesehen.

In den Fig. 8 bis 11 ist ein Führungselement 8 in verschiedenen Ansichten dargestellt, wobei Fig. 9 ein Schnitt gemäß der Linie A-A in Fig. 8 ist. Das Führungselement 8 umfasst insbesondere einen rampenartigen Kanal 11, in welchem das Gleitelement 9 des Verschubelements 4 geführt wird. Auf Grund der variablen Höhe der Rampe wird das Verschwenken des mit dem Führungselement 8 verbundenen Sektors 3 erzielt. Am Ende des rampenartigen Kanals 11 ist ein zur Richtung des rampenartigen Kanals 11 im Wesentlichen senkrechter Kanal 12 angeordnet, um eine unerwünschte weitere Verschwenkung des Sektors 3 zu Verhindern, wenn das Gleitelement 9 zu weit verschoben wird. Das Führungselement 8 weist weiters Führungsrillen 13 zur Fixierung am Sektor 3 auf.

In den Fig. 12 bis 15 wird der Ablauf eines Schaltvorganges einer erfindungsgemäßen Stellvorrichtung gezeigt. Die Mitnehmerelemente 5 eines Verschubelements 4 sind schematisch dargestellt, die übrigen Mitnehmerelemente 5 sowie die Kettenblätter 2, 3 sind der Übersichtlichkeit halber nicht dargestellt. Mit 14 ist ein erfindungsgemäßes Stellelement bezeichnet, das auf einer Scheibe 15 um eine Achse 16 verschwenkbar angeordnet ist. Die Scheibe 15 und das Stellelement 14 sind von der Drehbewegung der Kettenblätter entkoppelt und bevorzugt starr am Fahrradrahmen angeordnet. Über einen Seilzug 17 und ein Zwischenelement 18 kann das Stellelement 14 zwischen zumindest zwei Stellpositionen um die Achse 16 verschwenkt werden. Das Stellelement 14 weist zwei als Ausnehmungen ausgebildete Eingriffsbereiche 19 auf, die ausgebildet sind, um mit den Mitnehmerelementen 5 zusammenzuwirken. Die Drehrichtung der Radblätter bzw. der Mitnehmerelemente 5 ist mit 20 bezeichnet.

In Fig. 12 ist die normale Fahrsituation dargestellt. Das Zugmittel ist auf dem aus Sektoren 3 bestehenden Kettenblatt angeordnet und die Mitnehmerelemente 5 der Verschubelemente 4 rotieren zusammen mit den Kettenblättern um die Drehachse 6. Das Stellelement 14 befindet sich in einer ersten Schaltstellung und berührt keines der beiden Mitnehmerelemente 5, während diese am Stellelement 14 vorbeirotieren.

In Fig. 13 ist die Einleitung des Schaltvorganges dargestellt. Das Stellelement 14 ist zur Einnahme der zweiten Schaltstellung radial nach innen in die Drehbahn der radial inneren Mitnehmerelemente 5 geschwenkt, sodass diese mit dem radial inneren Eingriffsbereich 19 des Stellelements 14 während der Drehung kollidieren. Das Mitnehmerelement 5 greift hierbei in den radial inneren Eingriffsbereich 19 des Stellelements 14 ein und nimmt dieses während der weiteren Bewegung mit. Das Stellelement 14 führt dabei eine Verschwenkung um seine Drehachse 16 aus, wodurch der Mitnehmer 5 samt des Verschubelements 4 radial nach innen verschoben wird.

In Fig. 14 ist das Stellelement am Ende seiner Schwenkbewegung dargestellt, wobei der Mitnehmer 5 vollständig radial nach innen gedrückt wurde. Das Stellelement 14 ist jetzt im Wesentlichen radial ausgerichtet, sodass der Mitnehmer 5 bei der weiteren Drehbewegung des Kettenblatts aus dem Eingriffsbereich 19 austaucht und das Stellelement 14 durch die Kraft einer nicht näher dargestellten Feder in die ursprüngliche Position zurückkehrt (Fig. 15). Während der Verschiebebewegung des Verschubelements 4 wird das mit dem Verschubelement 4 verbundene rampenförmige Führungselement 8 bewegt und der damit verbundene Sektor 3 des Kettenblattes wird aus der Fluchtebene herausgeschwenkt. Der oben beschriebene Vorgang wiederholt sich nacheinander für alle übrigen Sektoren 3, bis alle Sektoren 3 aus der Fluchtebene herausgeschwenkt wurden und das Zugmittel vollständig auf das ungeteilte Kettenblatt 2 umgestellt wurde.

Soll das Zugmittel nunmehr vom ungeteilten Kettenblatt 2 auf das aus den Sektoren 3 bestehende Kettenblatt geschalten werden, so wird der Vorgang im Wesentlichen wie oben beschrieben wiederholt, mit dem Unterschied, dass das Stellelement 14 radial nach außen zurück in die erste Stellposition geschwenkt wird, wodurch die Verschubelemente 4 nacheinander nach außen gedrückt und die Sektoren 3 dadurch in die Fluchtebene geschwenkt werden, sobald der radial äußere Mitnehmer in Eingriff mit dem radial äußeren Eingriffsbereich 19 des Stellelements 14 gelangt.

## Patentansprüche

1. Stellvorrichtung für Schaltgetriebe, insbesondere von Fahrrädern, umfassend zumindest zwei Radblätter, die wahlweise von einem umlaufenden Zugmittel umfassbar sind, wobei das Radblatt (2) mit dem kleinsten Durchmesser ungeteilt ist und wenigstens ein weiteres Radblatt aus zumindest zwei unabhängig voneinander verstellbaren Sektoren (3) besteht, die ausgebildet sind, um jeweils wahlweise in die durch das Radblatt (2) mit dem kleinsten Durchmesser gebildete Fluchtebene verlagert bzw. aus der Fluchtebene weg verlagert zu werden, sowie ein von der Drehbewegung der Radblätter entkoppeltes, verstellbares Stellelement (14) und mit den Radblättern mitdrehende Verschubelemente (4), wobei jedem Sektor (3) ein Verschubelement (4) zugeordnet ist, das mit dem jeweiligen Sektor (3) zusammenwirkt, um den Sektor (3) in Abhängigkeit von der Stellung des Verschubelements (4) in die Fluchtebene bzw. aus der Fluchtebene zu verlagern, wobei das Stellelement (14) mit den Verschubelementen (4) zusammenwirkt, um die Verschubelemente (4) während der Drehung wahlweise in eine erste und in eine zweite Stellung zu bewegen, **dadurch gekennzeichnet, dass** das Stellelement (14) zwischen einer ersten und einer zweiten Stellposition verstellbar ist, in denen das Stellelement (14) mit dem jeweils vorbeilaufenden Verschubelement (4) in Eingriff gelangt, um das Verschubelement (4) in die erste bzw. zweite Stellung zu bewegen, wobei das Stellelement (14) in der ersten und/oder der zweiten Stellposition auslenkbar gehalten ist, sodass es während wenigstens eines Teils der Umstellbewegung von dem Verschubelement (4) mitgenommen und ausgelenkt wird.

2. Stellvorrichtung nach Anspruch 1, **dadurch gekennzeichnet, dass** das Stellelement (14) mit einem Rückstellelement, insbesondere einer Feder, zusammenwirkt, welches ausgebildet ist, um das Stellelement (14) von der ausgelenkten Stellung in die erste bzw. zweite Stellposition zurückzuholen.

3. Stellvorrichtung nach Anspruch 1 oder 2, **dadurch gekennzeichnet, dass** das Verschubelement (4) in radialer Richtung zwischen der ersten und der zweiten Stellung bewegbar ist.

4. Stellvorrichtung nach Anspruch 3, **dadurch gekennzeichnet, dass** die Verschubelemente (4) und der jeweils zugeordnete Sektor (3) über eine Kulissenführung miteinander zusammenwirken, um die radiale Bewegung der Verschubelemente (4) in eine quer dazu verlaufende Verlagerung des Sektors (3) umzusetzen.

5. Stellvorrichtung nach einem der Ansprüche 1 bis 4, **dadurch gekennzeichnet, dass** das Stellelement (14) um eine in Richtung der Drehachse (6) der Radblätter verlaufende Schwenkachse (16) auslenkbar gehalten ist.

6. Stellvorrichtung nach einem der Ansprüche 1 bis 5, **dadurch gekennzeichnet, dass** das Radblatt (2) mit dem kleinsten Durchmesser Öffnungen aufweist, durch welche jeweils wenigstens ein Verschubelement (4) verläuft oder in welchen jeweils wenigstens ein Verschubelement (4) angeordnet ist.

7. Stellvorrichtung nach einem der Ansprüche 1 bis 6, **dadurch gekennzeichnet, dass** das Stellelement (14) dem Radblatt (2) mit dem kleinsten Durchmesser benachbart angeordnet ist.

8. Stellvorrichtung nach einem der Ansprüche 1 bis 7, **dadurch gekennzeichnet, dass** die Verschubelemente (4) jeweils zwei vorzugsweise axial vorragende Mitnehmerelemente (5), insbesondere Erhebungen oder Zapfen, aufweisen, die vorzugsweise in radialer Richtung voneinander beabstandet und die mit wenigstens einem Eingriffsbereich (19) des Stellelements (14) in Eingriff bringbar sind, wobei ein erstes Mitnehmerelement (5) in der ersten Stellposition des Stellelements (14) mit dem wenigstens einen Eingriffsbereich (19) in Eingriff bringbar und ein zweites Mitnehmerelement (5) in der zweiten Stellposition des Stellelements (14) mit dem wenigstens einen Eingriffsbereich (19) in Eingriff bringbar ist.

9. Stellvorrichtung nach einem der Ansprüche 1 bis 8, **dadurch gekennzeichnet, dass** das Stellelement (14) zwei Eingriffsbereiche (19) aufweist, wobei das erste Mitnehmerelement (5) in der ersten Stellposition des Stellelements (14) mit einem ersten Eingriffsbereich (19) in Eingriff bringbar und das zweite Mitnehmerelement (5) in der zweiten Stellposition des Stellelements (14) mit dem zweiten Eingriffsbereich (19) in Eingriff bringbar ist.

10. Stellvorrichtung nach einem der Ansprüche 1 bis 9, **dadurch gekennzeichnet, dass** der oder die Eingriffsbereich(e) (19) des Stellelements (14) von einer Ausnehmung, Mulde oder dgl. gebildet ist, in welche das jeweilige Mitnehmerelement (5) formschlüssig eingreift.

11. Stellvorrichtung nach einem der Ansprüche 1 bis 10, **dadurch gekennzeichnet, dass** ein elektrischer Antrieb zum Verstellen des Stellelements (14) zwischen der ersten und der zweiten Stellposition vorgesehen ist.

12. Gangschaltung, insbesondere für ein Fahrrad, umfassend eine Stellvorrichtung nach einem der Ansprüche 1 bis 11.

13. Fahrrad, umfassend eine Gangschaltung nach Anspruch 12.

## Claims

1. Actuating device for a manual transmission, in particular of bicycles, comprising at least two wheel profiles which can optionally be enclosed by a surrounding tension means, wherein the wheel profile (2) having the smallest diameter is undivided and at least one further wheel profile consists of at least two sectors (3) adjustable independently of one another, which are designed in order to be moved respectively optionally into the flush plane formed by the wheel profile (2) having the smallest diameter or out of the flush plane, and an adjustable actuating element (14) decoupled from the rotational movement of the wheel profiles and displacement elements (4) turning with the wheel profiles, wherein a displacement element (4) is assigned to each sector (3) and interacts with the respective sector (3) in order to displace the sector (3), depending on the position of the displacement element (4), into the flush plane or out of the flush plane, wherein the actuating element (14) interacts with the displacement elements (4) in order to move the displacement elements (4) during the rotation optionally into a first and into a second position, **characterised in that** the actuating element (14) can be adjusted between a first and a second actuating position, in which positions the actuating element (14) comes into engagement with the respective passing displacement element (4) in order to move the displacement element (4) into the first or second position, wherein the actuating element (14) is held in the first and/or the second actuating position in such a manner as to be able to be deflected, such that it is picked up and deflected by the displacement element (4) during at least one part of the transposition movement.

2. Actuating device according to claim 1, **characterised in that** the actuating element (14) interacts with a returning element, in particular a spring, which is designed to return the actuating element (14) from the deflected position into the first or second actuating position.

3. Actuating device according to claim 1 or 2, **characterised in that** the displacement element (4) is movable in radial direction between the first and the second position.

4. Actuating device according to claim 3, **characterised in that** the displacement elements (4) and the respectively assigned sector (3) interact with one another via a slide guide, in order to transform the radial movement of the displacement elements (4) into a displacement, extending perpendicularly thereto, of the sector (3).

5. Actuating device according to any of claims 1 to 4, **characterised in that** the actuating element (14) is held in a manner in which it can be deflected about a swivel axis (16) extending in the direction of the rotational axis (6) of the wheel profiles.

6. Actuating device according to any of claims 1 to 5, **characterised in that** the wheel profile (2) having the smallest diameter has openings through which respectively at least one displacement element (4) extends or in which respectively at least one displacement element (4) is disposed.

7. Actuating device according to any of claims 1 to 6, **characterised in that** the actuating element (14) is disposed adjacent to the wheel profile (2) having the smallest diameter.

8. Actuating device according to any of claims 1 to 7, **characterised in that** the displacement elements (4) have respectively two preferably axially protruding entrainment elements (5), in particular elevations or pegs, which are preferably distanced from one another in radial direction and which can be brought into engagement with at least one engagement area (19) of the actuating element (14), wherein a first entrainment element (5) in the first actuating position of the actuating element (14) can be brought into engagement with the at least one engagement area (19) and a second entrainment element (5) in the second actuating position of the actuating element (14) can be brought into engagement with the at least one engagement area (19).

9. Actuating device according to any of claims 1 to 8, **characterised in that** the actuating element (14) has two engagement areas (19), wherein the first entrainment element (5) in the first actuating position of the actuating element (14) can be brought into engagement with the first engagement area (19) and the second entrainment element (5) in the second actuating position of the actuating element (14) can be brought into engagement with the second engagement area (19).

10. Actuating device according to any of claims 1 to 9, **characterised in that** the engagement area(s) (19) of the actuating element (14) is formed by a recess, depression or similar, into which the respective entrainment element (5) engages in a form-fitting manner.

11. Actuating device according to any of claims 1 to 10, **characterised in that** an electrical drive is provided for adjusting the actuating element (14) between the first and the second actuating position.

12. Gear change, in particular for a bicycle, comprising an actuating device according to any of claims 1 to 11.

13. Bicycle, comprising a gear change according to claim 12.

## Revendications

1. Dispositif d'actionnement pour mécanisme de changement de vitesse, en particulier de bicyclettes, comprenant au moins deux plateaux, qui peuvent être entourés sélectivement par un moyen de traction tournant, dans lequel le plateau (2) avec le plus petit diamètre est en une seule partie et au moins un autre plateau est constitué d'au moins deux secteurs (3) réglables indépendamment l'un de l'autre, qui sont conçus pour être déplacés respectivement sélectivement dans le plan de fuite formé par le plateau (2) avec le plus petit diamètre ou déplacés hors du plan de fuite, ainsi qu'un élément d'actionnement (14) réglable, découplé du mouvement de rotation des plateaux et des éléments de déplacement (4) tournant avec les plateaux, dans lequel un élément de déplacement (4), qui coopère avec le secteur (3) respectif afin de déplacer le secteur (3) en fonction de la position de l'élément de déplacement (4) dans le plan de fuite ou hors du plan de fuite, est associé à chaque secteur (3), dans lequel l'élément d'actionnement (14) coopère avec les éléments de déplacement (4), afin de déplacer les éléments de déplacement (4) pendant la rotation sélectivement dans une première et dans une seconde position, **caractérisé en ce que** l'élément d'actionnement (14) peut être réglé entre une première et une seconde position d'actionnement, dans lesquelles l'élément d'actionnement (14) parvient en contact avec l'élément de déplacement (4) passant respectivement devant, afin de déplacer l'élément de déplacement (4) dans la première ou seconde position, dans lequel l'élément d'actionnement (14) est retenu dans la première et/ou la seconde position d'actionnement de manière à pouvoir être dévié, de sorte qu'il est entraîné et dévié par l'élément de déplacement (4) pendant au moins une partie du mouvement de changement de position.

2. Dispositif d'actionnement selon la revendication 1, **caractérisé en ce que** l'élément d'actionnement (14) coopère avec un élément de rappel, en particulier un ressort, lequel est conçu pour ramener l'élément d'actionnement (14) de la position déviée dans la première ou seconde position d'actionnement.

3. Dispositif d'actionnement selon la revendication 1 ou 2, **caractérisé en ce que** l'élément de déplacement (4) est mobile dans la direction radiale entre la première et la seconde position.

4. Dispositif d'actionnement selon la revendication 3, **caractérisé en ce que** les éléments de déplacement (4) et le secteur (3) respectivement associé coopèrent les uns avec les autres par l'intermédiaire d'un guide à coulisse, afin de transformer le mouvement radial des éléments de déplacement (4) en un déplacement, s'étendant transversalement à ceux-ci, du secteur (3).

5. Dispositif d'actionnement selon l'une quelconque des revendications 1 à 4, **caractérisé en ce que** l'élément d'actionnement (14) est retenu de manière à pouvoir être dévié autour d'un axe de pivotement (16) s'étendant en direction de l'axe de rotation (6) des plateaux.

6. Dispositif d'actionnement selon l'une quelconque des revendications 1 à 5, **caractérisé en ce que** le plateau (2) avec le plus petit diamètre présente des ouvertures à travers lesquelles respectivement au moins un élément de déplacement (4) s'étend ou dans lesquelles respectivement au moins un élément de déplacement (4) est disposé.

7. Dispositif d'actionnement selon l'une quelconque des revendications 1 à 6, **caractérisé en ce que** l'élément d'actionnement (14) est disposé au voisinage du plateau (2) avec le plus petit diamètre.

8. Dispositif d'actionnement selon l'une quelconque des revendications 1 à 7, **caractérisé en ce que** les éléments de déplacement (4) présentent respectivement deux éléments d'entraînement (5) faisant saillie de préférence axialement, en particulier des bossages ou tenons, qui sont espacés les uns des autres de préférence dans la direction radiale et qui peuvent être amenés en contact avec au moins une zone de contact (19) de l'élément d'actionnement (14), dans lequel un premier élément d'entraînement (5), dans la première position d'actionnement de l'élément d'actionnement (14), peut être amené en contact avec l'au moins une zone de contact (19), et un second élément d'entraînement (5), dans la seconde position d'actionnement de l'élément d'actionnement (14), peut être amené en contact avec l'au moins une zone de contact (19).

9. Dispositif d'actionnement selon l'une quelconque des revendications 1 à 8, **caractérisé en ce que** l'élément d'actionnement (14) présente deux zones de contact (19), dans lequel le premier élément d'entraînement (5), dans la première position d'actionnement de l'élément d'actionnement (14), peut être amené en contact avec une première zone de contact (19) et le second élément d'entraînement (5), dans la seconde position d'actionnement de l'élément d'actionnement (14), peut être amené en contact avec la seconde zone de contact (19).

10. Dispositif d'actionnement selon l'une quelconque des revendications 1 à 9, **caractérisé en ce que** la ou les zone(s) de contact (19) de l'élément d'actionnement (14) est formée par un évidement, creux ou similaire, dans lequel l'élément d'entraînement (5) respectif s'insère par coopération de formes.

11. Dispositif d'actionnement selon l'une quelconque des revendications 1 à 10, **caractérisé en ce qu'**un entraînement électrique est prévu pour le réglage de l'élément d'actionnement (14) entre la première et la seconde position d'actionnement.

12. Changement de vitesse, en particulier pour une bicyclette, comprenant un dispositif d'actionnement selon l'une quelconque des revendications 1 à 11.

13. Bicyclette, comprenant un changement de vitesse selon la revendication 12.
